# EUROPÄISCHE PATENTSCHRIFT

(11) **EP 1 169 182 B1**
(45) Veröffentlichungstag und Bekanntmachung des Hinweises auf die Patenterteilung: **16.07.2003**
(21) Anmeldenummer: 00917016.8
(22) Anmeldetag: 30.03.2000
(51) Int. Cl.: B60B 1/00, B60B 1/04

(54) **SPEICHENNIPPEL, INSBESONDERE FÜR FAHRRÄDER UND DERGLEICHEN**
SPOKE NIPPLE, ESPECIALLY FOR BICYCLES AND THE LIKE
ECROU DE RAYON, NOTAMMENT POUR BICYCLETTES ET SIMILAIRES

(30) Priorität: 09.04.1999 DE 19916046; 03.11.1999 DE 19952929; 21.01.2000 DE 10002528
(43) Veröffentlichungstag der Anmeldung: 09.01.2002
(73) Patentinhaber: DT Swiss AG, 2504 Biel (CH)
(72) Erfinder: D'ALBERTO, Maurizio, CH-2555 Brügg (CH); JÄGER, Gerrit, CH-2603 Péry (CH)
(74) Vertreter: Wallinger, Michael, Dr.-Ing.
(86) Internationale Anmeldenummer: EP0002811
(87) Internationale Veröffentlichungsnummer: WO00061387

(56) Entgegenhaltungen:
- EP-A- 0 838 352
- DE-A- 3 519 679
- US-A- 4 729 605
- US-A- 5 697 745

## Beschreibung

Die vorliegende Erfindung betrifft einen Speichennippel, welcher insbesondere für den Einsatz an Rädern von Fahrrädern, Rollstühlen und dergleichen geeignet ist.

Weiterhin können derartige Speichennippel nicht nur an den Rädern von Fahrrädern verwendet werden, sondern es ist ebenso möglich, solche Speichennippel bei den Rädern von sonstigen Ein- oder Mehrrädern, wie z. B. an den Rädern von (Fahrrad-) Anhängern, Kinder- und Sportwagen und sonstigen Rädern zu verwenden. Aus Gründen der Vereinfachung wird die Erfindung aber nachfolgend im wesentlichen im Bezug auf ihren Einsatz an den Rädern von Fahrrädern beschrieben, wobei diese Beschreibung nicht für den Anmeldungsbereich einschränkend sein soll.

Speichennippel werden typischerweise an den Felgen der Laufräder von Fahrrädern angeordnet, um die Speichen zu befestigen. Speichennippel sind meist als im wesentlichen zylindrische Körper ausgeführt, die an einem Ende eine Verdickung, den Nippelkopf aufweisen können. Bei der Montage wird ein Ende des Speichennippels von außen durch ein Loch in der Felge eingeführt, welches einen Durchmesser aufweist, der kleiner als der Nippeldurchmesser bzw. kleiner als der Nippelkopf ist, so daß der Speichennippel in der Felge gehalten wird. Eine von der Nabe radial nach außen ragende Speiche weist an ihrem Ende ein Außengewinde auf, auf welches der mit einem Innengewinde versehene Speichennippel aufgeschraubt wird.

In einer zweiten bekannten Ausführungsform weisen Speichennippel keinen sogenannten Speichenkopf auf, sondern sie sind im wesentlichen wie konventionelle Schraubenmuttern ausgeführt. Diese Speichennippel weren vorzugsweise an doppelwandigen bzw. Hohlkammerfelgen verwendet, bei denen derartige Speichennippel in der Felge in einem Bereich zwischen der ersten und der zweiten Felgenwand angeordnet werden. An den Orten, an denen Speichen vorgesehen sind, weist eine solche doppelwandige Felge in radialer Richtung Löcher in beiden Wänden auf, wobei die radial gesehen äußere Wand ein Loch mit größerem Durchmesser aufweist als die radial gesehen innere Wand, so daß der Speichennippel von außen durch die Öffnung in der äußeren Felgenwand eingeführt, aber nicht durch die Öffnung in der radial inneren Wand durchgeführt werden kann. Derartige Speichennippel werden also wenigstens teilweise in dem Hohlkammerbereich der Felgen angeordnet und weisen üblicherweise an dem Ende ein Sechskantprofil auf, welches im montierten Zustand radial außen liegt, um den Speichennippel auf die entsprechende Speiche aufzuschrauben.

Laufräder weisen zwischen 6 und 48 Speichen auf, die meist symmetrisch über den Umfang verteilt angeordnet sind. Bei der Montage werden die einzelnen Speichennippel derart verschraubt, daß die Felge in einer Ebene ausgerichtet ist, und weiterhin der Radius über dem Umfangswinkel konstant ist.

Um zuverlässige Gebrauchseigenschaften des Rades zu ermöglichen, werden die Speichen unter eine solche Spannung gesetzt, daß auch bei Belastungen das Rad nur wenig deformiert wird.

Nachteilig an den im Stand der Technik bekannten Speichennippeln ist jedoch, daß die Speichennippel sich beim Aufschrauben auf die Speiche relativ schwer drehen lassen.

Aus der gattungsgemässen EP 0 838 352 A2 ist ein Speichennippel bekannt, bei dem im Nippelkopf ein Einsatz aus einem verformbaren Material vorgesehen ist, dessen Innendurchmesser etwas kleiner als der Auβendurchmesser der einzuschraubenden Speiche gewählt ist, so daß nach dem Einschrauben das System aus Speiche/Speichennippel klemmt. Weiterhin wird dort ein Verfahren erwähnt, bei dem von Radherstellern direkt vor der Montage auf die Speichen oder Speichennippel Klebstoff gesprüht wird.

Aus der EP 0 838 352 A2 ist ein Speichennippel für Fahrräder bekannt, der einen Körper ausweist, der im wesentlichen rotationssymmetrisch zur Längsachse gestaltet ist, wobei der Speichennippel eine von einem ersten Ende des Körpers zugängliche Bohrung aufweist, die konzentrisch zur Längsachse angeordnet ist, wobei in der Bohrung ein Gewinde angeordnet ist, dessen Achse mit der Längsachse zusammenfällt und sich das Gewinde über einen Längsabschnitt erstreckt und dafür vorgesehen ist, eine Speiche mit einem entsprechenden Gewinde aufzunehmen.

Ein weiterer Nachteil der im Stand der Technik bekannten Speichennippel ist, daß die Schraubverbindung zwischen Speichennippel und Speiche, auch wenn das Gewinde schwergängig ist, oftmals dazu neigt, sich während des Betriebs mit der Zeit zu lösen.

Das führt dazu, daß das Rad instabiler wird und die Felge nicht mehr exakt in einer Ebene liegt, so daß das Rad eine "Acht" aufweist. Ein solches Lösen bzw. Lockern einer oder mehrerer Speichen kann nicht nur zu einer "Acht" und bzw. oder unbequemeren Fahren führen, sondern reduziert u. a. die Sicherheit u. U. erheblich.

Der Bruch einer Speiche während des Betriebs mindert die Sicherheit eines Fahrrads unter Umständen erheblich, und deshalb sollten Ursachen für solche Speichenbrüche, so weit möglich, reduziert werden.

Neben äußeren Einwirkungen, wie unsachgemäßer Handhabung, Gewaltanwendung, ist die Materialermüdung an der Speiche eine der häufigsten Ursachen für einen Speichenbruch, wobei der Materialermüdungsbruch nach der Überschreitung der Dauerfestigkeit entsteht. Im abrollenden Laufrad eines Fahrrads wird die Speiche durch die Betriebslast wechselnd einmal auf Druck und einmal auf Zug belastet, wobei z. B. bei einer Belastung von 900 N (entsprechend etwa 90 kg Gewichtsbelastung) und 32 Speichen diese Last auf etwa drei Zug- und drei Druckspeichen verteilt wird, so daß näherungsweise die Zugspeiche zusätzlich zu ihrer Vorspannung um etwa 300 N gezogen und die Druckspeiche entgegen der Vorspannung um etwa 300 N entspannt wird.

Da Speichen typischerweise nur Zuglasten aufnehmen können, muß die Speichenvorspannung so hoch gewählt werden, daß auch bei hoher Belastung eine genügend hohe Restspannung (Vorspannung minus Druckspannung) verbleibt. Andererseits muß die Höchstspannung der Zugspeiche (Vorspannung plus Zugspannung) innerhalb des elastischen Bereichs der Speiche bleiben. Am rollenden Laufrad werden die Speichen demnach mit einer schwellenden Zugspannung belastet, deren Amplitude im gewählten Beispiel 300 N beträgt. Ein Ermüdungsbruch einer Speiche tritt häufig im Bereich des Gewindes auf. Ist aber die Vorspannung der Speiche angemessen dimensioniert, nimmt der im elastischen Bereich vorgespannte Speichenschaft die wechselnden Belastungen dauerschwingfest auf, wodurch das Gewinde entlastet wird und Ermüdungsbrüche weitgehend verhindert. Daß heißt, daß mit einer genügend hohen Vorspannung einer Materialermüdung und demzufolge einem Speichenbruch entgegengewirkt wird.

Im Betrieb kann, unter anderem durch die wechselnden Belastungen bedingt, der Speichennippel sich auf der Speiche drehen und lösen, wodurch die Speichenspannung und die Sicherheit reduziert wird.

Im sportlichen, semiprofessionellen und professionellen Bereich werden hochqualitative Materialien für Fahrräder verwendet, und für die Laufräder von Fahrrädern werden leichte und feste Materialien eingesetzt. Bei solchen Laufrädern werden die Speichen bei der Montage unter hohe Spannung gesetzt, um eine hohe Festigkeit zu erreichen und ein Lockern der Speichen im Betrieb zu vermindern. Allerdings ist auch bei derartig hochqualitativen Laufrädern nach kurzem Betrieb eine Wartung nötig.

Der vorliegenden Erfindung liegt deshalb die Aufgabe zugrunde, einen Speichennippel, insbesondere für Räder und Fahrräder und dergleichen zur Verfügung zu stellen, welcher ohne großen Kraftaufwand auf eine Speiche aufzuschrauben ist und bei welchem ein zufälliges und unbeabsichtigtes Lösen oder Lockern verhindert wird.

Diese Aufgabe wird erfindungsgemäß durch den Gegenstand des Anspruchs 1 und des Anspruchs 18 gelöst.

Bevorzugte Weiterbildungen der Erfindung sind Gegenstand der Unteransprüche.

Die vorliegende Erfindung stellt einen Speichennippel zur Verfügung, welcher mit geringem Kraftaufwand auf eine Speiche aufzuschrauben ist, und bei welchem ein zufälliges oder unbeabsichtigtes Lösen der Schraubverbindung durch Setzungserscheinungen oder Vibrationen zuverlässig verhindert wird.

Der erfindungsgemäße Speichennippel weist einen Körper auf, der im wesentlichen rotationssymmetrisch zu einer Längsachse dieses Körpers gestaltet ist und sowohl kurz als auch im wesentlichen langgestreckt ausgeführt sein kann.

Weiterhin weist der erfindungsgemäße Speichennippel eine Bohrung auf, die konzentrisch zur Längsachse angeordnet ist und von wenigstens dem ersten Ende des Körpers zugänglich ist, wobei vorzugsweise sich die Bohrung als durchgehende Bohrung von dem ersten zu dem zweiten Ende des Speichennippels erstreckt. Über wenigstens einen Längsabschnitt der Bohrung erstreckt sich ein Gewinde parallel zur Längsachse, wobei dieses Gewinde dafür vorgesehen ist, eine Speiche mit einem entsprechenden Gewinde aufzunehmen.

An und/oder in diesem Speichennippel ist eine Klebstoffmenge vorgesehen, die so beschaffen und angeordnet ist, daß bei Einschrauben einer Speiche dieser Klebstoff als Gewindesicherung aktiviert wird, so daß ein selbsttätiges Lösen der Speiche zuverlässig vermieden wird.

Der erfindungsgemäße Speichennippel hat viele Vorteile.

Durch den Einsatz eines erfindungsgemäßen Speichennippels und der daran bzw. der darin vorgesehenen Klebstoff menge, die beim Einschrauben einer Speiche -in den Speichennippel aktiviert wird, wird eine Schmierung des Innengewindes des Speichennippels und des Außengewindes der Speiche erzielt, so daß ein leichtgängiges Aufschrauben des Speichennippels auf die Speiche ermöglicht wird.

Ein weiterer Vorteil des erfindungsgemäßen Speichennippels ist, daß durch die Aktivierung des Klebstoffs als Gewindesicherung die Speiche zuverlässig in dem Gewinde des Speichennippels abgesichert wird. Ein zufälliges oder unbeabsichtigtes Lösen des Speichennippels bzw. der Speiche ist damit im wesentlichen ausgeschlossen.

Eine dauerhafte Verbindung zwischen Speichennippel und-Speiche ist besonders vorteilhaft, da durch den Einsatz des erfindungsgemäßen Speichennippels eine der maßgeblichen Ursachen für Dauerwechsel-Festigkeitsbrüche an den Speichen und auch für die Bildung von "Achten" bei Rädern beseitigt wird.

In einer bevorzugten Weiterbildung der Erfindung ist an einem zweiten Ende des Speichennippelkörpers eine im wesentlichen ringförmige Verdickung als Nippelkopf angeordnet, wobei in einem Querschnitt diese ringförmige Verdickung abgerundet oder eckig als Drei-, Vier- oder Vieleck ausgeführt sein kann.

Vorzugsweise wird in dem erfindungsgemäßen Speichennippel ein Standardklebstoff verwendet, der als Ein-, Zwei- oder Mehrkomponentenklebstoff ausgeführt sein kann. Bevorzugt sind auch Acryl- oder Acrylatklebstoffe sowie Kunst- oder Epoxydharze mit entsprechenden Härtern oder Latex (-Mikropartikel) oder sonstige Standardklebstoffe, wie sie im Stand der Technik bekannt geworden sind.

Die Verwendung eines Einkomponentenklebstoffs ist besonders vorteilhaft, da eine besonders einfache Anordnung des Klebstoffs an bzw. in dem Speichennippel erfolgen kann.

Die Verwendung eines Zwei- oder Mehrkomponentenklebstoffs ist auch besonders vorteilhaft, da durch die vorzugsweise räumlich getrennte Anordnung der einzelnen Komponenten des Klebstoffs längere Lagerzeiten vor der Montage keine Rolle spielen, da bevorzugt Klebstoffe eingesetzt werden, die auch über längere Zeiträume zeitlich stabil lagerbar sind, so daß ein erfindungsgemäßer Speichennippel auch Monate oder Jahre nach der Produktion verwendbar ist.

Wird ein Zwei- oder Mehrkomponentenklebstoff eingesetzt, so ist es in einer Weiterbildung bevorzugt, daß der Klebstoff vor Auftragen bzw. Einbringen der Klebstoffmenge in den Speichennippel als Emulsion (auch in einer Lösung) vorliegt, wobei eine erste Klebstoffkomponente als Grundkomponente und eine zweite Klebstoffkomponente darin vorzugsweise statistisch verteilt angeordnet ist. Diese zweite Klebstoffkomponente kann dann in Form von Mikropartikeln, kleiner oder kleinster Tröpfchen, Zylinder, Kugeln oder Kügelchen, oder in Form von Streifen oder Bahnen in der ersten Komponente enthalten sein. Vorzugsweise bleibt dann, wenn die Klebstoffmenge in den Speichennippel eingebracht ist, eine solche oder ähnliche Verteilung wenigstens im wesentlichen im Speichennippel erhalten. Vorzugsweise wird die Struktur erst durch Einschrauben einer Speiche oder dergleichen in den Speichennippel zerstört. Vorzugsweise wird durch das Aufschrauben des Speichennippels auf eine Speiche die gesamte Klebstoffmenge wenigstens teilweise im wesentlichen homogenisiert, so daß die beiden Klebstoffkomponenten miteinander vermischen und eine Aktivierung des Klebstoffs erfolgt.

Vorzugsweise liegt die zweite Klebstoffkomponente mikroverkapselt in bzw. an der ersten Klebstoffkomponente vor.

In einer bevorzugten Weiterbildung aller zuvor beschriebenen Weiterbildungen ist der verwendete Klebstoff derart beschaffen, daß der Klebstoff bei Raumtemperatur in einem Zeitraum von bis zu zwei Tagen, vorzugsweise innerhalb von zehn Stunden, im wesentlichen aushärtet, so daß nach der Aushärtung eine im wesentlichen feste Verbindung zwischen Speiche und Speichennippel vorliegt. Bevorzugterweise härtet der Klebstoff bei üblichen Raumtemperaturen zwischen 10 und 40 °C in wenigen Stunden und besonders bevorzugt innerhalb einer Zeitspanne zwischen etwa 30 Minuten und etwa 1 Stunde derart aus, daß eine Belastung der Verbindung möglich ist.

In einer bevorzugten Weiterbildung der Erfindung ist die Klebstoffmenge in eine, zwei, drei oder mehrere Teilmengen aufgeteilt, wobei vorzugsweise jede einzelne dieser wenigstens einen Teilmenge in sich zusammenhängend angeordnet ist.

In einer weiteren bevorzugten Weiterbildung des erfindungsgemäßen Speichennippels ist die Klebstoffmenge in wenigstens zwei Teilmengen aufgeteilt, die jeweils vorzugsweise im wesentlichen zusammenhängend, aber wenigstens durch einen Spalt, eine Trennwand oder dergleichen räumlich getrennt voneinander angeordnet sind.

Die Anordnung der gesamten Klebstoffmenge in einer Teilmenge ist besonders vorteilhaft, da insbesondere die Produktion derartiger Speichennippel vereinfacht wird. Ein weiterer Vorteil ist, daß bei geeigneter Anordnung der Klebstoffmenge eine zuverlässige Verteilung des Klebstoffs beim Einschrauben einer Speiche erzielt wird.

Die Aufteilung der Klebstoffmenge auf wenigstens zwei oder eine Vielzahl von Teilmengen ist auch besonders vorteilhaft, da durch eine räumliche Trennung der einzelnen Klebstoffmengen bzw. Teilmengen unter Umständen die gesamte Klebstoffmenge reduziert werden kann und eine besonders gleichförmige Auftragung erzielt wird.

Bei Verwendung eines Zwei- oder Mehrkomponentenklebstoffs ist die Aufteilung in verschiedene Teilmengen, die durch wenigstens einen Spalt, eine Trennwand oder dergleichen räumlich getrennt voneinander angeordnet sind, besonders vorteilhaft, da die Aktivierung des Klebstoffs durch Zusammenführen der einzelnen Teilkomponenten erfolgt.

In einer weiteren bevorzugten Ausführungsform der Erfindung ist wenigstens eine der wenigstens einen Teilmenge im wesentlichen in einer Form angeordnet, die einer Gruppe von Formen entnommen ist, die Kugel-, Zylinder-, Stab-, Ellipsoid-, Quader-, Tropfen- und Mischformen der genannten Formen und dergleichen umfaßt.

In einer weiteren bevorzugten Weiterbildung ist wenigstens eine Teilmenge oder im wesentlichen die gesamte Klebstoffmenge im wesentlichen flächig aufgetragen.

Die Anordnung des Klebstoffs in Kugel- oder Tropfenformen ist besonders vorteilhaft, da diese Formen eine relativ kleine Oberfläche aufweisen. Die Anordnung in flächiger Form ist andererseits besonders vorteilhaft, da der Klebstoff über eine relativ große Fläche verteilt angeordnet ist und nicht erst beim Einschrauben durch die Schraube verteilt werden muß.

In der bevorzugten Weiterbildung der Erfindung weist wenigstens eine Teilmenge bzw. die gesamte Klebstoffmenge eine im wesentlichen geschlossene Schutzschichteinrichtung auf, um den Klebstoff vor äußeren Einflüssen zu schützen. Vorzugsweise ist diese Schutzschichteinrichtung im wesentlichen luftdicht ausgeführt, so daß Klebstoffe in der Schutzschichteinrichtung geschützt und gelagert werden können, die bei Kontakt z. B. mit Sauerstoff aktiviert werden.

Weiterhin ist besonders bevorzugt die Dicke der Schutzschichteinrichtung kleiner als 1 mm, vorzugsweise kleiner als 0,5 mm, vorzugsweise kleiner als 0,1 mm bzw. kleiner als 0,05 mm.

In einer bevorzugten Weiterbildung ist diese Schutzschichteinrichtung als eine Hülle ausgeführt, wobei die Schutzschichteinrichtung auch mehrere einander umgebende Hüllen aufweisen kann. Es ist auch möglich, daß eine innere Kammer vorgesehen ist, die eine erste Komponente des Klebstoffs enthält und die von einer Hülle umgeben ist, die wiederum wenigstens teilweise von einer zweiten Kammer bzw. Komponente des Klebstoffs umgeben ist, und daß ganz außen eine weitere Hülle vorgesehen ist.

Es ist besonders vorteilhaft, wenigstens eine bzw. alle Teilmengen mit einer Schutzschichteinrichtung zu versehen, die z. B. als Hülle bzw. Hüllen ausgeführt sein kann, da die Klebstoffmenge bzw. die einzelnen Teilmengen zuverlässig und sicher vor Umgebungs- oder Umwelteinflüssen geschützt werden können, so daß eine im wesentlichen zuverlässige Funktionsweise des erfindungsgemäßen Speichennippels ermöglicht wird.

In der bevorzugten Weiterbildung der Erfindung besteht die Schutzschichteinrichtung aus einem Material, welches dazu geeignet ist, den Klebstoff vor Alterungs- oder Aktivierungseinflüssen bei Lagerung des Speichennippels zu schützen. Als Materialien eignen sich die Standardmaterialien, wie sie im Stand der Technik bekannt sind. So ist es z. B. möglich, die einzelnen Teilmengen mit einem Standardlack zu überziehen, so daß ein Schutz erzielt wird. Weiterhin ist es möglich, eine Hülle bzw. Schutzschicht aus Gelatine, Polyvinylalkohol oder dergleichen vorzusehen. Außerdem ist es möglich, die Schutzschicht aus einem gängigen Kunst- bzw. Naturstoff oder einem weiteren Klebstoff herzustellen.

In einer bevorzugten Weiterbildung der Erfindung umfaßt die Schutzschichteinrichtung eine, zwei oder mehrere Schutzschichtlagen, die jeweils aus unterschiedlichen Materialien bestehen können. Es ist auch möglich, daß verschiedene Teilmengen des Klebstoffs unterschiedliche Schutzschichteinrichtungen bzw. Schutzschichtlagen aus verschiedenen Materialien aufweisen.

In einer bevorzugten Weiterbildung des erfindungsgemäßen Speichennippels werden wenigstens zwei Teilmengen des Klebstoffs benachbart angeordnet, wobei besonders bevorzugt bei Einsatz eines Zwei- oder Mehrkomponentenklebstoffs unterschiedliche Komponenten des Klebstoffs dann benachbart angeordnet werden.

Es ist z. B. möglich, wenigstens zwei Kammern in einer Art Klebstoffspeicher vorzusehen, die räumlich wenigstens durch einen Spalt oder eine (dünne) Trennwand voneinander getrennt angeordnet sind und so beschaffen sind, daß ein Übertritt einer ersten Klebstoffkomponente, welche in der ersten Kammer angeordnet ist, in die zweite Kammer, welche eine zweite Komponente des Klebstoffs enthält, vermieden wird. In dieser Ausführungsform ist es bevorzugt, daß diese Kammern von wenigstens einer Schutzschicht umgeben sind.

Die benachbarte Anordnung wenigstens zweier Teilmengen des Klebstoffs ist insbesondere bei Verwendung von Zwei- oder Mehrkomponentenklebstoffen besonders vorteilhaft, da bei Aktivierung des Klebstoffs eine zuverlässige Durchmischung der Komponenten erzielt wird.

In einer bevorzugten Weiterbildung der Erfindung wird beim Einschrauben einer Speiche wenigstens die Schutzschichteinrichtung einer Teilmenge zerstört. Der dann aktivierte und austretende Klebstoff trägt zunächst zur Schmierung des Gewindes bei und dient weiterhin nach Aushärtung als Sicherungsmittel dieser Speichen-Speichennippel-Verbindung.

Beim Einsatz eines Zwei- oder Mehrkomponentenklebstoffs ist es besonders bevorzugt, daß beim Einschrauben einer Speiche wenigstens die Schutzschichteinrichtungen zweier unterschiedlicher Teilmengen zerstört werden, so daß durch das, beim Einschrauben der Speiche hervorgerufene, Vermischen der beiden Teilmengen der Klebstoff aktiviert und diese Verbindung zuverlässig gesichert wird.

In einer bevorzugten Weiterbildung der Erfindung ist wenigstens eine Teilmenge oder im wesentlichen die gesamte Klebstoffmenge wenigstens teilweise in der Bohrung angeordnet.

Die Anordnung des Klebstoffs in der Bohrung, vorzugsweise auf der Seite auf der die Speiche eingeführt wird, ist besonders vorteilhaft, da beim Einführen der Speiche diese mit Klebstoff benetzt wird, so daß eine zuverlässige Verteilung des Klebstoffs erzielt wird.

Die Anordnung des Klebstoffs im Gewindebereich des Speichennippels ist vorteilhaft, da der Klebstoff beim Einschrauben der Speiche aktiviert wird.

In einer bevorzugten Weiterbildung der Erfindung ist wenigstens eine Teilmenge im wesentlichen flächig über einen Abschnitt des Gewindes angeordnet, wobei dieser Abschnitt vorzugsweise mehr als ein Viertel, besonders bevorzugt mehr als 50 % und besonders bevorzugt mehr als 75 % der Länge bzw. die gesamte Länge des Gewindes ausmacht.

In einer oder aller der zuvor beschriebenen Weiterbildungen der Erfindung wird ein 1- oder 2-Komponenten-Klebstoff zur Nippelsicherung eingesetzt. Der Klebstoff kann z. B. mikroverkapselt vorliegen. Als Lösungsmittel werden vorzugsweise die gängigen, im Stand der Technik bekannten Lösungsmittel wie Alkohol, Wasser und dergleichen eingesetzt. In einer bevorzugten Weiterbildung wird Latex als Klebstoffmittel verwendet.

In dieser bevorzugten Weiterbildung liegt bei Einsatz eines z. B. Zwei-Komponentenklebstoffs das Klebstoffmittel in einer Lösung vor, die wenigstens drei Komponenten enthält. Dies ist wenigstens ein polares oder unpolares Lösungsmittel und zwei Klebstoffkomponenten, von denen vorzugsweise eine in kleiner bzw. kleinster Partikelform oder auch als Mikropartikel vorliegt.

Besonders bevorzugt ist, daß bei Verwendung von wenigstens zwei Klebstoffkomponenten wenigstens eine davon aktiviert werden muß, um eine Aktivierung des Gesamtklebstoffs zu erzielen. Die Aktivierung der ersten Klebstoffkomponente kann durch mechanische Kräfte ausgelöst werden, wenn diese erste Komponente in Partikelform vorliegt, wie es z. B. beim Einschrauben einer Speiche in den Speichennippel erfolgt.

In allen zuvor beschriebenen Weiterbildungen der Erfindung ist der Körper des Speichennippels im wesentlichen aus Metall gefertigt. Vorzugsweise wird Messing oder aus Gewichtsgründen Leichtmetall und besonders bevorzugt Aluminium oder Titan oder eine Aluminium- oder Titanlegierung verwendet, wobei insbesondere auch ein Gewindeeinsatz aus einem anderen Material vorgesehen sein kann, um die Belastbarkeit des Gewindes zu erhöhen. Die Oberfläche kann eine Beschichtung aufweisen und/oder vernickelt sein, um Schutz vor Korrosion zu bieten und/oder die Leichtgängigkeit (als Gleitmittel) zu erhöhen.

Weiterhin weist in vorzugsweise allen der zuvor beschriebenen bevorzugten Weiterbildungen der erfindungsgemäße Speichennippel in einem Längsabschnitt eines Bereichs nahe dem zweiten Ende ein polygonartig geformtes Außen- oder Innenprofil auf, welches vorzugsweise als Vierkant oder Sechskant ausgeführt ist, so daß zur Feinjustage der Speichennippel mit einem geeigneten Werkzeug gegriffen und gedreht werden kann.

vorzugsweise ist wenigstens eine Klebstoffmenge derart in diesem Speichennippel angeordnet, daß ein zur Längsachse konzentrischer virtueller Zylinder mit einem Durchmesser, welcher einem Gewindedurchmesser entspricht, ein Volumen dieser Klebstoffmenge bzw. dieser Teilmenge schneidet. Dies ist besonders vorteilhaft, da durch das Einschrauben dieser Speiche das Volumen wenigstens einer Teilmenge geschnitten wird und der Klebstoff aktiviert wird.

Weiterhin ist es bevorzugt, daß wenigstens ein kleinster radialer Abstand von der Längsachse zu wenigstens einer Teilmenge in einer Ebene senkrecht zur Längsachse kleiner ist als ein halber Durchmesser des Gewindes.

In einer bevorzugten Weiterbildung der Erfindung ist der verwendete Klebstoff derart beschaffen, daß ein zufälliges und/oder unbeabsichtigtes Lösen der Verbindung Speichennippel/Speiche zuverlässig verhindert wird, wobei auch weiterhin eine Feinjustage oder auch ein Lösen der Verbindung unter Zuhilfenahme von Werkzeugen ermöglicht wird. Eine solche Wirkung kann dadurch erzielt werden, daß in der Verbindung der Klebstoff nach Aktivierung eine hohe Zähigkeit erlangt, so daß das Drehen des Speichennippels auf der Speiche stark erschwert wird, so daß auch bei Vibrationen wie sie im täglichen Fahrbetrieb auftreten, ein zufälliges Lösen verhindert wird.

In einer weiteren bevorzugten Ausführungsform des erfindungsgemäßen Speichennippels ist der verwendete Klebstoff derart beschaffen, daß er nach Aktivierung aushärtet.

In einer weiteren bevorzugten Weiterbildung einer oder mehrerer der zuvor beschriebenen Weiterbildungen der Erfindung weist der erfindungsgemäße Speichennippel keinen sogenannten Nippelkopf auf, sondern ist als Sechskantnippel ausgeführt, der vorzugsweise in einer Hohlkammerfelge eingesetzt wird. Ein derartiger Speichennippel weist auf wenigstens einem Abschnitt des Außenprofils ein polygonartiges Profil senkrecht zu seiner Längsachse auf, welches vorzugsweise als Sechskant ausgeführt ist, so daß der Speichennippel mit einem entsprechenden Werkzeug auf eine zu befestigende Speiche aufgeschraubt werden kann.

Mit dem erfindungsgemäßen Verfahren wird ein Speichennippel gemäß der Erfindung oder einer der bevorzugten Weiterbildungen hergestellt.

Dazu wird der Klebstoff mit einer Klebstoffmenge versehen. Vorzugsweise wird der Klebstoff (der eine oder mehr Komponenten enthalten kann) in wenigstens einem Lösungsmittel vorzugsweise stark verdünnt, und es wird wenigstens ein Teil, Bereich oder Abschnitt des Speichennippels mit dem Klebstoff bzw. der Klebstofflösung versehen, wobei bei Einsatz einer Klebstofflösung dann wenigstens ein Teil des Speichennippels mit der Klebstofflösung benetzt wird. Vorzugsweise wird in einem anschlieβenden Schritt der Speichennippel getrocknet.

In einer Weiterbildung wird wenigstens ein (oder eine Vielzahl von) Speichennippel(n) in die Emulsion bzw. Lösung wenigstens kurzzeitig eingetaucht, so daß vorzugsweise mindestens der Gewindebereich des Speichennippels oder auch der gesamte Speichennippel mit der Emulsion benetzt wird.

Dabei ist es möglich, daß bestimmte Bereiche oder Teile des Speichennippels nicht mit der Lösung benetzt werden, da sie z. B. vorher mit einem Mittel versehen wurden, um ein Benetzen zu verhindern. Anschließend wird der bzw. die Speichennippel aus der Emulsion herausgeholt. Die an dem Speichennippel verbleibende Emulsion tropft im wesentlichen ab bzw. verdunstet an der Umgebung, wobei ein dünner Klebstoffbelag am Speichennippel verbleibt.

Es ist ebenso möglich, daß durch einen sanften oder starken Luftstrom, der z. B. durch Luftdüsen hervorgerufen wird, die Emulsion von dem Speichennippel abgeblasen wird.

Durch die Kapillarwirkung in dem Gewinde des Speichennippels verbleibt dort eine gewisse Menge der Emulsion in dem Gewindebereich, während vorzugsweise der Rest des Speichennippels praktisch frei von Klebstoffemulsion ist.

In einem weiteren Verfahrensschritt erfolgt die Trocknung der Speichennippel, die z. B. bei Raumtemperatur oder auch bei erhöhten Temperaturen von 50 bis 60 oder bis zu 100 °C erfolgen kann.

Die obere Grenze der Trocknungstemperatur ergibt sich durch den verwendeten Klebstoff, da eine Zersetzung des Klebstoffs vermieden werden soll. Während der Trocknung verdampft das Lösungsmittel, so daß anschließend der Klebstoff nur noch an der Wand bzw. vorzugsweise nur im Gewinde des Speichennippels vorhanden ist.

In einer weiteren bevorzugten Weiterbildung des erfindungsgemäßen Verfahrens wird eine Klebstoffmenge dem Speichennippel zugeführt. Dabei kann der Klebstoff auch in einer Klebstofflösung vorliegen. Vorzugsweise erfolgt die Zufuhr der Klebstoffmenge zu dem Speichennippel definiert, so daß bei einer Anzahl von Speichennippeln jeweils eine im wesentlichen gleiche Klebstoffmenge zugeführt wird.

Eine solche Zufuhr kann z. B. über eine dünne Klebstoffleitung in Form eines flexiblen Schlauchs oder eines Röhrchens oder über eine Dosiermaschine, Peristaltikpumpe oder ähnliche Dosiereinrichtungen, wie sie im Stand der Technik bekannt sind, erfolgen, wobei vorzugsweise im wesentlichen jedem Speichennippel separat Klebstoff zugeführt wird.

Vorzugsweise wird die Klebstoffmenge in das Durchgangsloch des Speichennippels eingeführt. Es ist möglich, daß eine flächige Verteilung des Klebstoffs bei der Zufuhr erfolgt; es ist allerdings auch möglich, daß eine Verteilung der Klebstoffmenge über eine Fläche nach der Zufuhr erfolgt. Beispielsweise ist es möglich, daß nach der Zufuhr einer Klebstoffmenge der Speichennippel um seine Längsachse rotiert wird, so daß eine Verteilung der Klebstoffmenge durch Fliehkräfte erfolgt. Ebenso ist es auch möglich, daß die Zufuhr des Klebstoffs so erfolgt, daß die Klebstoffmenge wenigstens einen Abschnitt des Speichennippels flächig benetzt.

Vorzugsweise wird auch in dieser bevorzugten Weiterbildung der Speichennippel anschließend getrocknet.

Durch diese Verfahrensschritte wird erzielt, daß der Speichennippel beim Aufschrauben auf eine Speiche effektiv gesichert werden kann, da die Klebstoffmenge vorzugsweise über einen größeren Bereich und vorzugsweise über das gesamte Gewinde im wesentlichen gleichmäßig verteilt wird. Eine solche flächige Auftragung des Klebstoffs bietet erhebliche Vorteile.

Üblicherweise werden bei der Produktion von Rädern für Fahrräder Einspeichmaschinen eingesetzt, die Räder automatisch einspeichen. Wie schon oben erwähnt, spielt die Speichenvorspannung bei der Sicherheit, Haltbarkeit und Belastbarkeit von Rädern eine große Rolle. Deshalb werden Speichen mit einem vordefinierten und einstellbaren Drehmoment von den Einspeichmaschinen angezogen, so daß sich im wesentlichen eine konstante Speichenspannung über alle Speichen eines Rades ergibt.

Werden Speichennippel eingesetzt, die eine zentrale, z. B. kugelförmige, Klebstoffmenge aufweisen, so kann diese Klebstoffmenge beim Einführen der Speiche in den Nippel einen mitunter nicht unbeträchtlichen Widerstand hervorrufen. Das von konventionellen Einspeichmaschinen aufzubringende Drehmoment ist in solchen Fällen nicht konstant, und es ist möglich, daß das Drehmoment kurz vor oder in dem Moment des Zerstörens der Hülle der Klebstoffmenge eine Größe erreicht, die dem eingestellten Maximaldrehmoment entspricht.

Derartige Einspeichmaschinen würden unter Umständen dann programmgemäß mit dem Anziehen der nächsten Speiche fortfahren, so daß unter Umständen einzelne Speichen eines Rades nicht ordnungsgemäß angezogen würden, was die Sicherheit herabsetzen würde. Werden solche Speichennippel verwendet, so muß entweder sichergestellt sein, daß angepaßte Einspeichmaschinen Verwendung finden, oder es können die Räder z. B. auch per Hand eingespeicht werden. Es ist aber auch möglich, daß die Anordnung der Klebstoffmenge in dem Speichennippel und die Wahl der Materialien derart ausfällt, daß eine Erhöhung des Drehmoments durch Durchstoßen der Klebstoffhülle nicht auftritt.

Sehr vorteilhaft ist allerdings der Einsatz eines Speichennippels, bei dem die Klebstoffmenge im wesentlichen flächig über das Gewinde des Speichennippels aufgetragen ist. Wird eine Speiche in den Speichennippel eingeführt und der Speichennippel gedreht, so ist das aufzubringende Drehmoment konstant und ändert sich nicht durch Zerstörung der Klebstoffhülle, so daß plötzliche Drehmomentänderungen nicht auftreten. Dies ist sehr vorteilhaft, da auch konventionelle Einspeichmaschinen eingesetzt werden können.

Ein weiterer Vorteil des erfindungsgemäßen Verfahrens ist, daß keine weiteren, unter Umständen aufwendige Maschinen benötigt werden. Wird die Klebstoffmenge z. B. in Form einer Kugel in den Nippel eingeführt, so ist eine separate Maschine erforderlich, um nach der Produktion der Nippel jeden einzelnen Nippel mit einer entsprechenden Klebstoffkugel zu versehen. Eine solche Maschine ist beim normalen Nippelherstellungsprozeß nicht vorgesehen, so daß der Aufwand zur Herstellung durch-den Einsatz einer weiteren Spezialmaschine erhöht wird.

Werden die Speichennippel über das erfindungsgemäße Verfahren flächig mit einer Klebstoffmenge versehen, so entfällt die Verwendung einer zusätzlichen Spezialmaschine. Bei dem erfindungsgemäßen Verfahren wird im einfachsten Fall ein Sieb verwendet, welches mit einer Anzahl von Speichennippeln in eine Klebstoffemulsion eingetaucht wird. Nach dem Herausholen-des Siebes mit den Speichennippeln können diese getrocknet und anschließend direkt verwendet werden.

Erfindungsgemäße Speichennippel, bei denen die Klebstoffmenge im wesentlichen in dem hohlen Bereich des Nippels angeordnet ist, bieten den Vorteil, daß auch bei Lagerung einer Vielzahl von Speichennippeln in einem Behälter sich die Klebstoffmenge unterschiedlicher Nippel normalerweise nicht berühren, so daß die Klebstoffmenge unversehrt bleibt. Würde eine Klebstoffmenge auf Speichen aufgebracht, könnten ich die einzelnen Klebstoffmengen berühren, und es könnte u. U. eine unbeabsichtigte Aktivierung erfolgen.

Ein weiterer Vorteil ist, daß, wenn nur Speichennippel mit einer Klebstoffmenge versehen werden, ein Hersteller oder Händler eine geringere Anzahl unterschiedlicher Produkte auf Vorrat halten muß, da die Anzahl unterschiedlicher Speichennippel auf dem Markt geringer ist als die Anzahl unterschiedlicher Speichen (Speichen gibt es in vielen unterschiedlichen Längen).

Weitere Vorteile, Merkmale und Anwendungsmöglichkeiten der vorliegenden Erfindung ergeben sich aus der nachfolgenden Beschreibung von Ausführungsbeispielen mit den Zeichnungen. Darin zeigen:
- Fig. 1: eine Seitenansicht eines erfindungsgemäßen Speichennippels im Halbschnitt;
- Fig. 2: eine Seitenansicht eines weiteren Ausführungsbeispiels eines erfindungsgemäßen Speichennippels im Halbschnitt; und
- Fig. 3: eine Seitenansicht eines weiteren Ausführungsbeispiels eines erfindungsgemäßen Speichennippels im Halbschnitt.

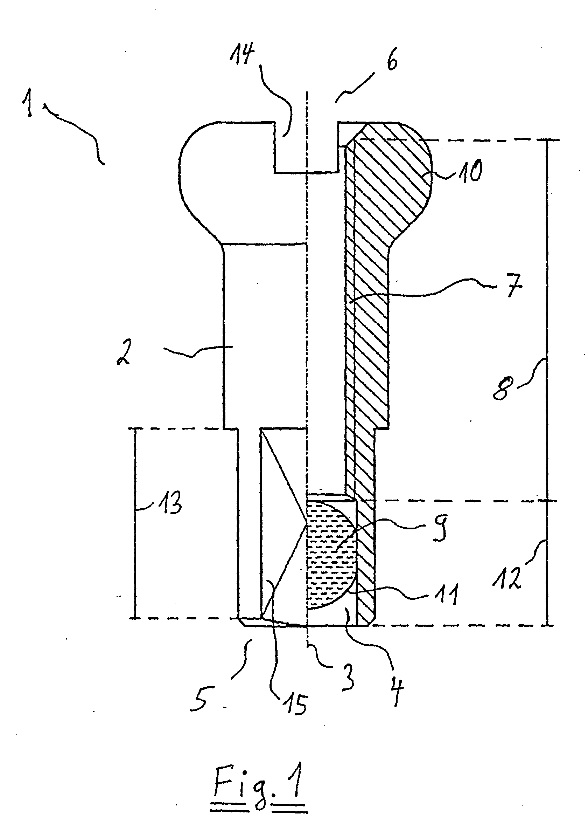

Ein erstes Ausführungsbeispiel eines erfindungsgemäßen Speichennippels 1, insbesondere für das Rad eines Fahrrads, wird nun in bezug auf die Fig. 1 beschrieben.

Der Speichennippel 1, der im Halbschnitt dargestellt ist, weist einen Körper 2 auf, der im wesentlichen langgestreckt und zylindrisch geformt ist und ein erstes Ende 5 und ein zweites Ende 6 aufweist, wobei das erste Ende 5 dafür vorgesehen ist, eine Speiche (nicht dargestellt) aufzunehmen.

Der Körper 2 des Speichennippels 1 ist im wesentlichen rotationssymmetrisch zu einer Längsachse 3 ausgeführt und weist eine Bohrung 4 auf, die sich im Ausführungsbeispiel durchgehend vom ersten Ende 5 zum zweiten Ende 6 erstreckt.

In einem Bereich 12 nahe dem ersten Ende 5 des Speichennippels 1 hat die Bohrung 4 einen größeren Durchmesser als in dem restlichen Bereich, der den Längsabschnitt 8 mit einem Innengewinde aufweist.

An dem zweiten Ende des Speichennippels 1 ist im Ausführungsbeispiel eine ringförmige Verdickung bzw. ein Speichennippelkopf 10 angeordnet, der in einem Querschnitt parallel zur Längsachse abgerundet ausgeführt ist.

Weiterhin ist am zweiten Ende 6 des Speichennippels eine Öffnung 14 vorgesehen, die in einer Ebene senkrecht zur Längsachse 3 in der Aufsicht im wesentlichen rechteckig ausgeführt ist und die so beschaffen ist, daß der Speichennippel mit einem Werkzeug, wie z. B. einem Schraubendreher, drehbar ist. Bei der Montage des erfindungsgemäßen Speichennippels wird ein Werkzeug in die Öffnung 14 eingesetzt und der Speichennippel auf eine Speiche aufgeschraubt.

An dem ersten Ende 5 weist der Speichennippel 1 einen Bereich 13 parallel zur Längsachse 3 auf, in welchem der Speichennippel 1 in einer Ebene senkrecht zur Längsachse 3 ein polygonartiges Außenprofil aufweist, welches im Ausführungsbeispiel als Vierkant mit vier Seitenflächen 15 ausgeführt ist.

Bei der Montage wird zunächst ein Werkzeug in die Öffnung 14 eingeführt und dann gedreht, so daß der Speichennippel 1 auf eine Speiche aufgeschraubt wird. Die Feinjustage erfolgt dann unter Einsatz eines Werkzeuges, welches in dem Bereich 13 angesetzt wird und über einen Formschluß mit den Seitenflächen 15 drehfest mit dem Speichennippel 1 verbunden wird, so daß über eine Drehung des Werkzeugs (nicht dargestellt) eine Feinjustage des Speichennippels erfolgen kann.

In der Bohrung 4 ist nahe dem ersten Ende 5 des Speichennippels 1 eine Klebstoffmenge 9 angeordnet, welche eine Schutzschicht 11 aufweist. In diesem Ausführungsbeispiel ist die gesamte Klebstoffmenge als eine Teilmenge in einer Form angeordnet, die im wesentlichen einer Kugel entspricht. Die Klebstoffmenge 9 weist eine Schutzschichthülle 11 auf, die im geschlossenen Zustand ein Aushärten des Klebstoffs verhindert, wobei die Schutzschichthülle 11 derart beschaffen ist, daß durch ein Einführen einer Speiche in die Bohrung 4 am ersten Ende 5 des Speichennippels 1 diese Schutzschichthülle 11 zerstört wird, so daß der Klebstoff 9 das Außengewinde der Speiche und das Innengewinde des Speichennippels 7, welches in dem Bereich 8 angeordnet ist, benetzt und zur Schmierung der Gewinde beiträgt, so daß der Speichennippel 1 sich leicht auf der Speiche drehen läßt.

Im Ausführungsbeispiel wird ein Klebstoff verwendet, der bei Raumtemperatur innerhalb von 20 Minuten so weit aushärtet, daß eine erste Belastung der Verbindung möglich ist.

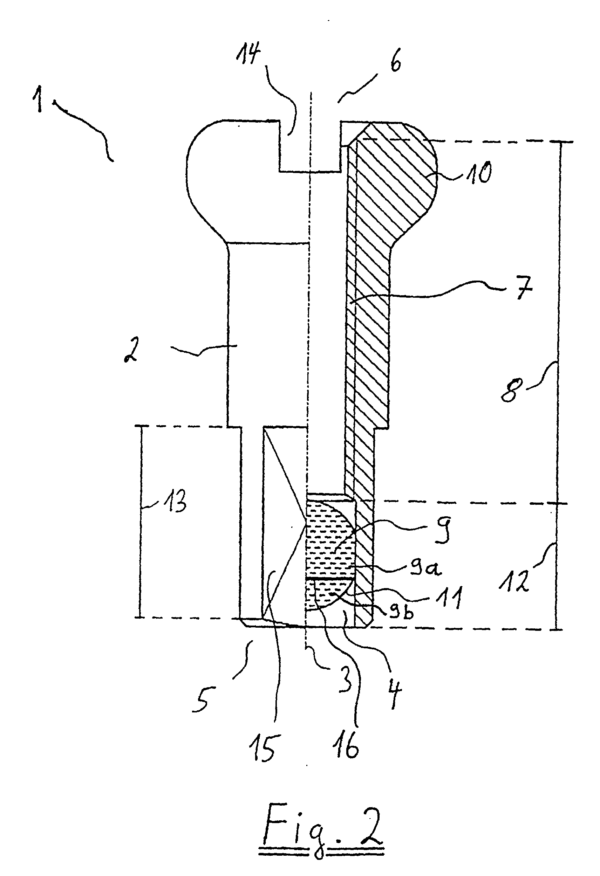

In Fig. 2 ist ein zweites Ausführungsbeispiel des erfindungsgemäßen Speichennippels 1 dargestellt. Die Abmessungen und Bezeichnungen im zweiten Ausführungsbeispiel entsprechen denen vom ersten Ausführungsbeispiel.

Der erfindungsgemäße Speichennippel weist eine im wesentlichen langgestreckte und im wesentlichen zur Längsachse 3 rotationssymmetrische Form mit einer durchgehenden Bohrung 4 auf, welche in einem Bereich 12 nahe dem ersten Ende 5 des Speichennippels 1 einen größeren Durchmesser aufweist. Im wesentlichen über die restliche Länge des Speichennippels 1 weist die durchgehende Bohrung 4 einen Abschnitt 8 mit einem Innengewinde 7 auf.

In dem Bereich 12 der Bohrung 4 nahe dem ersten Ende 5 des Speichennippels 1 ist eine Klebstoffmenge 9 angeordnet, die wie im ersten Ausführungsbeispiel in einer Kugelform angeordnet ist.

Die Klebstoffkugel 9 weist eine erste Kammer 9a und eine zweite Kammer 9b auf, die unterschiedlich groß sind, wobei vom ersten Ende 5 aus gesehen zunächst eine kleinere Kammer 9b angeordnet ist und sich dahinter eine zweite größere Kammer 9a anschließt.

In diesem Ausführungsbeispiel wird als Klebstoff ein Zweikomponentenklebstoff verwendet, wobei in der ersten Kammer 9a der Klebstoff bzw. eine erste Komponente und in der zweiten Kammer 9b der Härter bzw. die zweite Komponente des Klebstoffs angeordnet ist.

Die Klebstoffkugel 9 weist eine äußere Schutzschicht 11 auf, die ein Austreten des Klebstoffs verhindert. Weiterhin ist -zwischen der ersten Kammer 9a und der zweiten Kammer 9b eine Schutzschicht 16 vorgesehen, die ein Durchmischen der beiden Klebstoffkomponenten im Normalfall verhindert.

Wird nun bei der Montage des Speichennippels 1 eine Speiche in die Bohrung 4 von dem ersten Ende 5 des Speichennippels 1 eingeführt, werden die äußere Schutzschicht 11 und die Trennschicht 16 der beiden Klebstoffkammern zerstört, so daß durch ein weiteres Einführen der Speiche (nicht dargestellt) in die Bohrung 4 die beiden Klebstoffkomponenten wirksam und zuverlässig vermischt werden, wodurch eine Aktivierung des Klebstoffs ausgelöst wird.

Der austretende Klebstoff benetzt die Gewinde, so daß einerseits eine Schmierung der Schraubverbindung erzielt wird und andererseits der Klebstoff innerhalb kurzer Zeit aushärtet, wobei die Aushärtungszeit klebstoffabhängig ist und bei bevorzugten Klebstoffen zwischen zwei Minuten und mehreren Stunden bei Raumtemperatur beträgt.

Obwohl es in den Fig. 1 und 2 nicht dargestellt ist, sei darauf hingewiesen, daß die Klebstoffmenge nicht nur in einer solchen Kugelform angeordnet sein muß, sondern auch in beliebigen anderen Formen angeordnet sein kann. Weiterhin ist es ebenso möglich, die Klebstoffmenge flächig oder auf kleine Klebstofftropfen verteilt, z. B. in dem Bereich 8 des Gewindes 7, vorzusehen.

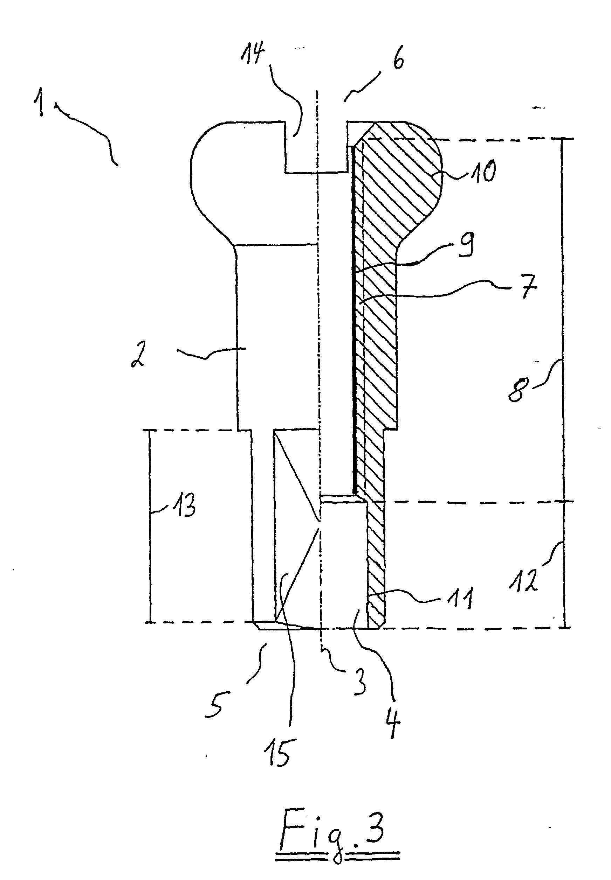

In Fig. 3 ist ein drittes Ausführungsbeispiel des erfindungsgemäßen Speichennippels 1 dargestellt. Auch in diesem Ausführungsbeispiel entsprechen die Abmessungen und Bezeichnungen denen vom ersten Ausführungsbeispiel.

Der erfindungsgemäße Speichennippel 1 weist einen Nippelkopf 10 an einem Ende und am zweiten Ende einen Mehrkant 15 auf. In einem Bereich 8 einer durchgehenden Bohrung 4 mit einer Längsachse 3 ist ein Innengewinde 7 vorgesehen, welches auf das Ende einer Speiche (nicht dargestellt) aufgeschraubt wird.

Der erfindungsgemäße Speichennippel weist weiterhin eine Klebstoffmenge 9 auf, die in dem Innengewinde 7 des Speichennippels angeordnet ist. Der erfindungsgemäße Speichennippel 1 wurde nach der Herstellung des eigentlichen Nippels 1 in eine Klebstoffemulsion getaucht, so daß im wesentlichen der gesamte Nippel mit einer feinen Klebstoffschicht überzogen wurde. Nach dem Herausholen aus der Klebstoffemulsion wurde der Klebstoff, der im Ausführungsbeispiel Latex enthält, von der Oberfläche des Speichennippels abgeblasen. Im wesentlichen über den gesamten Bereich 8 des Innengewindes 7 ist der Klebstoff dabei durch Kapillarwirkung erhalten geblieben. Nach der Trocknung des überschüssigen Lösungsmittels verbleibt der Klebstoff im Bereich 8 des Innengewindes 7 und bildet dort die Klebstoffmenge 9.

Wird der Speichennippel 1 gemäß dem dritten Ausführungsbeispiel auf das Außengewinde einer Speiche aufgeschraubt, so kommt das Außengewinde mit der Speiche mit dem Innengewinde 7 und somit mit der Klebstoffmenge 9 des Speichennippels 1 in Kontakt, wodurch (z. B. die Mikropartikel) sich öffnen und eine zuverlässige Klebwirkung zwischen dem Gewinde der Speiche und dem Gewinde des Speichennippels entsteht.

Der in Fig. 1 und 2 dargestellte Speichennippel wird vorzugsweise durch ein Verfahren hergestellt, bei dem jedem Speichennippel von einem Ende eine definierte Klebstoffmenge zugeführt wird, wobei das Verfahren auch derart erfolgen kann, daß zunächst eine erste Klebstoffkomponente und anschließend eine zweite Klebstoffkomponente zugeführt wird. Dann ergibt sich eine Klebstoffmenge im Speichennippel 1, wie in Fig. 2 dargestellt, wo eine räumliche Trennung von zwei Klebstoffkomponenten vorliegt.

Der in Fig. 3 dargestellte Speichennippel 1 kann ebenfalls über ein Verfahren hergestellt werden, bei dem dem Speichennippel eine gewisse Klebstoffmenge zugeführt wird. Die Zufuhr kann z. B. über einen dünnen Schlauch oder ein dünnes Röhrchen erfolgen, und der Speichennippel kann nach der Zufuhr mit einer relativ hohen Rotationsgeschwindigkeit um seine Längsachse gedreht werden, so daß sich durch die Fliehkraft eine im wesentlichen gleichmäßige Verteilung über den Gewindeabschnitt des Speichennippels 1 ergibt.

Ebenso ist es in einer anderen Ausführungsform möglich, daß z. E. eir. dünner Schlauch in das zweite Ende 6 des Speichennippels eingeführt und im wesentlichen über den gesamten Abschnitt 8 des Innengewindes 7 hineingeschoben wird. Anschließend wird Klebstoff in den dünnen Schlauch gefördert und tritt aus der Öffnung am Ende aus. Gleichzeitig mit der Förderung wird der Schlauch wieder in Richtung auf das zweite Ende 6 des Speichennippels bewegt, so daß während des Austretens von Klebstoff der Schlauch wieder aus dem Nippel herausgezogen wird. Mit einem solchen Verfahren kann der Klebstoff über den Gewindeabschnitt 8 im wesentlichen homogen verteilt werden, wobei z. B. eine zusätzliche Rotation des Speichennippels 1 um seine Längsachse eine Homogenisierung bewirken kann.

## Patentansprüche

1. Speichennippel (1), insbesondere für Fahrräder und dergleichen, mit:
einem Körper (2), welcher im wesentlichen rotationssymmetrisch zu einer Längsachse (3) dieses Körpers (2) gestaltet ist,
einer von wenigstens einem ersten Ende (5) dieses Körpers (2) zugänglichen Bohrung (4), welche konzentrisch zur Längsachse (3) angeordnet ist,
einem in dieser Bohrung (4) angeordneten Gewinde (7), dessen Achse mit dieser Längsachse (3) zusammenfällt, welches sich über wenigstens einen Längsabschnitt (8) erstreckt und welches dafür vorgesehen ist, eine Speiche mit einem entsprechenden Gewinde aufzunehmen,
**dadurch gekennzeichnet, daß**
eine Klebstoffmenge (9) in diesem Speichennippel (1) vorgesehen ist, wobei diese Klebstoffmenge (9) weiterhin so beschaffen und angeordnet ist, daß dieser Klebstoff beim Einschrauben in diesen Speichennippel (1) als Gewindesicherung aktivierbar ist;
wobei diese Klebstoffmenge (9) in wenigstens eine Teilmenge aufgeteilt ist;
wenigstens eine dieser wenigstens einen Teilmenge von einer im wesentlichen geschlossenen Schutzschicht (11) umgeben ist; und
wenigstens eine dieser wenigstens einen Teilmenge wenigstens teilweise in dieser Bohrung (4) angeordnet ist.

2. Speichennippel nach Anspruch 1, **dadurch gekennzeichnet,**
**daß** eine im wesentlichen ringförmige Verdickung (10) als Nippelkopf (10) vorgesehen ist, welche an einem zweiten Ende (6) dieses Körpers angeordnet ist.

3. Speichennippel nach mindestens einem der vorhergehenden Ansprüche, **dadurch gekennzeichnet,**
**daß** dieser Klebstoff einer Gruppe von Klebstoffen entnommen ist, welche Ein-, Zwei- oder Mehrkomponentenklebstoffe, Acrylklebstoffe, Acrylate, Kunst- oder Epoxydharze mit entsprechendem Härter, oder sonstige Standardklebstoffe oder dergleichen umfaßt.

4. Speichennippel nach mindestens einem der vorhergehenden Ansprüche, **dadurch gekennzeichnet,**
**daß** jede dieser wenigstens einen Teilmenge (9a, 9b) dieser Klebstoffmenge (9) zusammenhängend angeordnet ist.

5. Speichennippel nach mindestens einem der vorhergehenden Ansprüche, **dadurch gekennzeichnet,**
**daß** diese Klebstoffmenge (9) in wenigstens zwei, drei, vier oder eine Vielzahl von Teilmengen (9a, 9b) aufgeteilt ist, welche vorzugsweise im wesentlichen räumlich getrennt voneinander angeordnet sind.

6. Speichennippel nach mindestens einem der vorhergehenden Ansprüche, **dadurch gekennzeichnet,**
**daß** wenigstens eine dieser wenigstens einen Teilmenge (9a, 9b) im wesentlichen in einer Form angeordnet ist, die einer Gruppe von Formen entnommen ist, welche Kugelformen, Zylinderformen, Stabformen, Ellipsoidformen, Quaderformen und dgl. umfaßt.

7. Speichennippel nach mindestens einem der vorhergehenden Ansprüche, **dadurch gekennzeichnet,**
**daß** wenigstens eine dieser wenigstens einen Teilmenge (9a, 9b) im wesentlichen flächig aufgetragen ist.

8. Speichennippel nach mindestens einem der vorhergehenden Ansprüche, **dadurch gekennzeichnet,**
**daß** diese Schutzschicht (11) luftdicht ist und/oder vorzugsweise im wesentlichen eine Schutzschichtdicke kleiner als 1 mm, vorzugsweise kleiner 0,5 mm, besonders bevorzugt kleiner 0,1 mm aufweist.

9. Speichennippel nach mindestens einem der vorhergehenden Ansprüche, **dadurch gekennzeichnet,**
**daß** diese Schutzschicht (11) aus einem Material besteht, welches einer Gruppe von Materialien entnommen ist, die Lacke, Gelatine, Polyvinylalkohole, Kunststoffe, Naturstoffe, Klebstoffe oder dgl. umfaßt, wobei eine Schutzschicht eine, zwei oder mehrere Schutzschichtlagen aus verschiedenen Materialien umfassen kann und verschiedene Teilmengen (9a, 9b) unterschiedliche Schutzschichten (11) aufweisen können.

10. Speichennippel nach mindestens einem der vorhergehenden Ansprüche, **dadurch gekennzeichnet,**
**daß** wenigstens zwei Teilmengen (9a, 9b) dieses Klebstoffs im wesentlichen benachbart angeordnet sind.

11. Speichennippel nach mindestens einem der vorhergehenden Ansprüche, **dadurch gekennzeichnet,**
**daß** eine erste Teilmenge (9a, 9b) mit einer ersten Klebstoffkomponente im wesentlichen benachbart zu einer zweiten Teilmenge (9b, 9a) mit einer zweiten K1ebstoffkomponente angeordnet ist.

12. Speichennippel nach mindestens einem der vorhergehenden Ansprüche, **dadurch gekennzeichnet,**
**daß** das Einschrauben einer Speiche wenigstens diese Schutzschicht (11) wenigstens einer dieser wenigstens einen Teilmenge (9a, 9b) zerstört und diesen Klebstoff aktiviert.

13. Speichennippel nach mindestens einem der vorhergehenden Ansprüche, **dadurch gekennzeichnet,**
**daß** wenigstens einer dieser wenigstens einen Teilmenge (9a, 9b) in einem Bereich (12) dieser Bohrung (4) angeordnet ist, welcher kein Gewinde aufweist.

14. Speichennippel nach mindestens einem der vorhergehenden Ansprüche, **dadurch gekennzeichnet,**
**daß** wenigstens eine oder eine Vielzahl dieser wenigstens einen Teilmenge (9a, 9b) wenigstens teilweise in diesem Längsabschnitt (8) dieses Gewindes (7) angeordnet ist.

15. Speichennippel nach mindestens einem der vorhergehenden Ansprüche, **dadurch gekennzeichnet,**
**daß** wenigstens eine dieser wenigstens einen Teilmenge (9a, 9b) flächig über einen Abschnitt (8), vorzugsweise mehr als 50 %, besonders bevorzugt mehr als 75 %, der Länge dieses Gewindes (7) angeordnet ist.

16. Speichennippel nach mindestens einem der vorhergehenden Ansprüche, **dadurch gekennzeichnet,**
**daß** dieser Körper (2) im wesentlichen aus Metall oder Stahl, vorzugsweise Leichtmetall, besonders bevorzugt Messing oder Aluminium oder Titan oder aus einer Aluminiumoder Titanlegierung besteht, wobei die Oberfläche eine Beschichtung aufweisen und/oder vernickelt sein kann.

17. Speichennippel nach mindestens einem der vorhergehenden Ansprüche, **dadurch gekennzeichnet,**
**daß** in einem Längsabschnitt (13) eines Bereichs nahe dem ersten Ende (5) das Außenprofil polygonartig geformt und vorzugsweise als Vierkant ausgeführt ist.

18. Speichennippel nach mindestens einem der vorhergehenden Ansprüche, **dadurch gekennzeichnet,**
**daß** diese Klebstoffmenge (9) wenigstens zwei Komponenten aufweist, wobei die zweite in Form kleiner Partikel in der ersten Komponente statistisch verteilt vorliegt.

19. Verfahren zur Herstellung eines Speichennippels (1) mit wenigstens einer Klebstoffmenge (9) gemäß einem der vorhergehenden Ansprüche, insbesondere für Fahrräder und dergleichen, welches die folgenden Schritte umfaßt:
a) Benetzen wenigstens eines Teils eines Speichennippels (1) mit einer Klebstofflösung;
wobei das Benetzen in einer Klebstofflösung erfolgt;
b) Trocknen des Speichennippels (1).

20. Verfahren nach Anspruch 19, **dadurch gekennzeichnet,**
**daß** anschließend an das Benetzen des Speichennippels (1) ein Entfernen vorzugsweise durch Abblasen der Klebstofflösung von der äußeren Oberfläche des Speichennippels erfolgt.

21. Verfahren nach Anspruch 19, **dadurch gekennzeichnet,**
**daß** diese Klebstoffmenge (9) diesem Speichennippel (1) über eine Zufuhreinrichtung vorzugsweise definiert zugeführt wird.

## Claims

1. Spoke nipple (1) especially for bicycles and the like, comprising:
a body (2) configured substantially rotationally symmetric to a longitudinal axis (3) of said body (2),
a bore (4) accessible from at least one first end (5) of said body (2) and arranged concentric to said longitudinal axis (3),
a thread (7) arranged in said bore (4) the axis of which corresponds with said longitudinal axis (3), extending over at least one longitudinal section (8), and which is provided for receiving a spoke having the corresponding threading,
**characterized in that**
a quantity of adhesive (9) is disposed in said spoke nipple (1), wherein said quantity of adhesive (9) is furthermore so disposed and arranged such that the adhesive can be activated as a thread locking patch upon said spoke nipple (1) being screwed into;
wherein said quantity of adhesive (9) is divided into at least one sub-quantity;
at least one of said at least one sub-quantity is encased within one substantially sealed protective coating (11);
at least one of said at least one sub-quantity is arranged to be at least partially within said bore (4).

2. Spoke nipple in accordance with claim 1, **characterized in that** a substantially ring-shaped thickening (10) is provided as a nipple head (10), and arranged at a second end (6) of said body.

3. Spoke nipple according to at least one of the preceding claims, **characterized in that** said adhesive is one taken from among a group of adhesives which includes single, dual or multi-component adhesives, acrylic adhesives, acrylates, synthetic or epoxy resin with the corresponding hardener, or other standard adhesives and the like.

4. Spoke nipple according to at least one of the preceding claims, **characterized in that** each of said at least one sub-quantity (9a, 9b) of said quantity of adhesive (9) is arranged contiguously.

5. Spoke nipple according to at least one of the preceding claims, **characterized in that** said quantity of adhesive (9) is divided into at least two, three, four or a plurality of sub-quantities (9a, 9b) which are preferably arranged to be substantially separated from one another spatially.

6. Spoke nipple according to at least one of the preceding claims, **characterized in that** at least one of said at least one sub-quantity (9a, 9b) is disposed to be substantially in the shape of a form which is one taken from among a group of forms which includes spherical and cylindrical forms, rods, ellipsoidals, cuboids and the like.

7. Spoke nipple according to at least one of the preceding claims, **characterized in that** at least one of said at least one sub-quantity (9a, 9b) is applied substantially flatly.

8. Spoke nipple according to at least one of the preceding claims, **characterized in that** said protective coating (11) is air-tight and/or preferably has substantially a protective coating layer thickness which is less than 1 mm, preferably less than 0.5 mm, and more preferably less than 0.1 mm.

9. Spoke nipple according to at least one of the preceding claims, **characterized in that** said protective coating (11 ) consists of a material taken from among a group of materials which includes lacquers, gels, polyvinyl alcohols, plastics, natural products, adhesives or the like, wherein one protective coating may comprise one, two or multiple protective coating layers made from different materials and different sub-quantities (9a, 9b) may have differing protective coatings (11).

10. Spoke nipple according to at least one of the preceding claims, **characterized in that** at least two sub-quantities (9a, 9b) of said adhesive are arranged substantially adjacently.

11. Spoke nipple according to at least one of the preceding claims, **characterized in that** a first sub-quantity (9a, 9b) having a first adhesive component is substantially adjacent a second sub-quantity (9a, 9b) having a second adhesive component.

12. Spoke nipple according to at least one of the preceding claims, **characterized in that** the screwing in of a spoke destroys at least said protective coating (11) of at least one of said at least one sub-quantity (9a, 9b) and activates said adhesive.

13. Spoke nipple according to at least one of the preceding claims, **characterized in that** at least one of said at least one sub-quantity (9a, 9b) is arranged in an area (12) of said bore (4) having no threading.

14. Spoke nipple according to at least one of the preceding claims, **characterized in that** at least one or a plurality of said at least one sub-quantity (9a, 9b) is arranged at least partially in said longitudinal section (8) of said thread (7).

15. Spoke nipple according to at least one of the preceding claims, **characterized in that** at least one of said at least one sub-quantity (9a, 9b) is disposed flatly across a section (8) preferably greater than 50%, and especially preferably greater than 75% of the length of said thread (7).

16. Spoke nipple according to at least one of the preceding claims, **charactertzed in that** said body (2) is comprised substantially of metal or steel, preferably light metal, especially preferably brass, aluminum or titanium, or of an aluminum or titanium alloy, wherein the surface may comprise a coating end/or can be nickel-plated.

17. Spoke nipple according to at least one of the preceding claims, **characterized in that** the outer profile at an area in longitudinal section (13) near the first end (5) is of polygon shape and is preferably of square bar configuration.

18. Spoke nipple according to at least one of the preceding claims, **characterized in that** said quantity of adhesive (9) comprises at least two components, wherein the second is in the form of small particulates distributed randomly in the first component.

19. Method for manufacturing a spoke nipple (1) having at least one quantity of adhesive (9) in accordance with one of the preceding claims, especially for bicycles and the like, comprising the following steps:
a) wetting at least a portion of a spoke nipple (1) with an adhesive solution;
wherein the wetting transpires in an adhesive solution;
b) drying the spoke nipple (1).

20. Method according to claim 19, **characterized in that**
subsequent said wetting of the spoke nipple (1), an elimination ensues preferably by blowing the adhesive solution off from the external surface of said spoke nipple.

21. Method according to claim 19, **characterized in that**
said quantity of adhesive (9) is applied in preferably defined manner to said spoke nipple (1) by means of a feeding device.

## Revendications

1. Ecrou de rayon (1), en particulier pour bicyclettes et telles, avec :
un corps (2), qui est formé en substance en rotation symétrique par rapport à un axe longitudinal (3) dudit corps (2),
un alésage (4) accessible par au moins une première extrémité (5) dudit corps (2), disposé de manière concentrique par rapport à l'axe longitudinal (3),
un filetage (7) disposé dans ledit alésage (4), dont l'axe coincide avec ledit axe longitudinal (3), qui s'étend sur au moins une section longitudinale (8) et qui est prévu pour accepter un rayon avec un filetage approprié,
**caractérisé en ce que**,
une quantité de colle (9) est prévue dans ledit écrou de rayon (1), où la quantité de colle (9) est en outre disposée et de nature à ce que ladite colle, lors du vissage dans ledit écrou de rayon (1) peut être activée en tant que frein filet ;
où la quantité de colle (9) se répartie en au moins un sous-ensemble ;
au moins un desdits au moins un sous-ensemble, est entouré d'une couche de protection (11) en substance fermée ; et
au moins un desdits au moins un sous-ensemble est disposé au moins en partie dans ledit alésage (4).

2. Ecrou de rayon, selon la revendication 1, **caractérisé en ce que** un épaississement (10) en substance annulaire est prévu comme tête de raccord fileté (10), qui est disposé en une seconde extrémité (6) dudit corps.

3. Ecrou de rayon, selon au moins une des revendications précédentes, **caractérisé en ce que**,
ladite quantité de colle est prélevée d'un groupe de colles, comprenant des colle à un, deux ou plusieurs constituants, colles acryliques, acrylates, résines synthétiques ou résines époxys avec des durcisseurs correspondants, ou diverses colles standards ou telles.

4. Ecrou de rayon, selon au moins une des revendications précédentes, **caractérisé en ce que**,
chacun desdits au mois un sous-ensemble (9a, 9b) de ladite quantité de colle (9) est disposé de manière continue.

5. Ecrou de rayon, selon au moins une des revendications précédentes, **caractérisé en ce que**,
ladite quantité de colle (9) est répartie en au moins deux, trois, quatre ou une multitude de sous-ensembles (9a, 9b), qui de préférence en substance sont disposés de manière séparée l'un de l'autre dans l'espace.

6. Ecrou de rayon, selon au moins une des revendications précédentes, **caractérisé en ce que**,
au moins un desdits au moins un sous-ensemble (9a, 9b) est en substance disposé dans un moule, qui est prélevé d'un groupe de moules, comprenant les moules en sphère, les moules en cylindre, les moules en barre, les moules en ellipse, les moules en rectangle et tels.

7. Ecrou de rayon, selon au moins une des revendications précédentes, **caractérisé en ce que**,
au moins un desdits au moins un sous-ensemble (9a, 9b) est en substance étalé à plat.

8. Ecrou de rayon, selon au moins une des revendications précédentes, **caractérisé en ce que**,
ladite couche protectrice (11) est hermétique et/ou de préférence en substance présente une épaisseur de couche protectrice inférieure à 1 mm, de préférence inférieure à 0,5 mm, particulièrement préférée inférieure à 0,1 mm.

9. Ecrou de rayon, selon au moins une des revendications précédentes, **caractérisé en ce que**,
ladite couche protectrice (11) se compose d'un matériau, qui est prélevé d'un groupe de matériaux comprenant, les vernis, les gélatines, les alcools polyvinyls, les plastiques, les substances naturelles, les colles ou tels, où une couche protectrice peut comprendre une, deux ou plusieurs couches de couche protectrice de différents matériaux, et différents sous-ensembles (9a, 9b) peuvent présenter différentes couches protectrices (11),

10. Ecrou de rayon, selon au moins une des revendications précédentes, **caractérisé en ce que**,
au moins deux sous-ensembles (9a, 9b) de ladite colle sont en substance disposés de manière avoisinante.

11. Ecrou de rayon, selon au moins une des revendications précédentes, **caractérisé en ce que**,
un premier sous-ensemble (9a, 9b) avec un premier constituant de colle est en substance disposé de manière avoisinante avec un second sous-ensemble (9a, 9b) avec un second constituant de colle.

12. Ecrou de rayon, selon au moins une des revendications précédentes, **caractérisé en ce que**,
le vissage d'un écrou détruit au moins ladite couche protectrice (11) d'au moins un desdits au moins un sous-ensemble (9a, 9b) et active ladite colle.

13. Ecrou de rayon, selon au moins une des revendications précédentes, **caractérisé en ce que**,
au moins un desdits au moins un sous-ensemble (9a, 9b) est disposé dans une zone (12) dudit alésage (4), qui ne présente aucun filetage.

14. Ecrou de rayon, selon au moins une des revendications précédentes, **caractérisé en ce que**,
au moins un ou une multitude desdits au moins un sous-ensemble (9a, 9b) est au moins en partie disposé dans ladite section longitudinale (8) dudit filetage (7).

15. Ecrou de rayon, selon au moins une des revendications précédentes, **caractérisé en ce que**,
au moins un desdits au moins un sous-ensemble (9a, 9b) est diposé à plat sur une section (8), de préférence de plus de 50%, particulièrement préféré de plus de 75%, de la longueur du filetage (7).

16. Ecrou de rayon, selon au moins une des revendications précédentes, **caractérisé en ce que**,
ledit corps (2) se compose en subtance de métal ou acier, de préférence d'alliage léger, particulièrement préféré de laiton ou d'aluminium ou de titane ou d'un alliage d'aliminium ou de titane, où la surface peut présenter un revêtement et/ou être nickeler.

17. Ecrou de rayon, selon au moins une des revendications précédentes, **caractérisé en ce que**,
dans une section longitudinale (13) d'une zone près de la première extrémité (5), le profil extérieur est façonné de manière polygonale et de préférence est réalisé de manière carré.

18. Ecrou de rayon, selon au moins une des revendications précédentes, **caractérisé en ce que**,
ladite quantité de colle (9) présente au moins deux constituants, où le second se présente en forme de petites particules statistiquement réparties dans le premier consituant.

19. Procédé de fabrication d'un écrou de rayon (1) avec au moins une quantité de colle (9) conformément à une des revendications précédentes, en particulier pour bicyclettes et telles, comprenant les étapes suivantes :
a) Mouillage d'au moins une partie d'un écrou de rayon (1) avec une solution de colle ;
où le mouillage s'effectue dans une solution de colle ;
b) Séchage de l'écrou de rayon (1).

20. Procédé selon la revendication 19, **caractérisé en ce que**, suite au mouillage de l'écrou de rayon (1) s'effectue un enlèvement de préférence par soufflage de la solution de colle de la surface extérieure de l'écrou de rayon.

21. Procédé selon la revendication 19, **caractérisé en ce que** ladite quantité de colle (9) alimente de préférence de manière définie ledit écrou de rayon (1) par une conduite d'alimentation.
